# EUROPEAN PATENT APPLICATION

(11) **EP 2 434 562 A1**
(43) Date of publication of application: **28.03.2012**
(21) Application number: 11007586.8
(22) Date of filing: 16.09.2011
(51) Int. Cl.: H01M 2/10, H01M 2/20

(54) **Battery pack and electric power tool including same**

(30) Priority: 27.09.2010 JP 2010216190
(71) Applicant: Panasonic Electric Works Power Tools Co., Ltd., Hikone Shiga 522-8520 (JP)
(72) Inventor: Miyazaki, Hiroshi, Shiga 522-8520 (JP); Sakaue, Masaaki, Shiga 522-8520 (JP); Okada, Yoshikazu, Yasu-city Shiga (JP)
(74) Representative: Samson & Partner

(57) **Abstract**

A battery pack includes cylindrical columnar battery cells arranged at least in two rows and two columns along vertical and horizontal directions orthogonal to center axes of the battery cells. Each of the battery cells includes an electrode terminal formed in one end portion thereof. The battery pack further includes a connector plate to which the electrode terminals of four vertically and horizontally adjoining battery cells are joined. The connector plate is arranged to parallel connect each pair of the battery cells adjoining in the same direction to form battery cell blocks. The connector plate is configured to serially connect the battery cell blocks. The center axes of the battery cells are positioned at vertexes of a parallelogram when the vertically and horizontally adjoining battery cells are seen at one end side thereof. The connector plate has a contour conforming to respective sides of the parallelogram.

## Description

### Field of the Invention

The present invention relates to a battery pack and an electric power tool provided with the battery pack.

### Background of the Invention

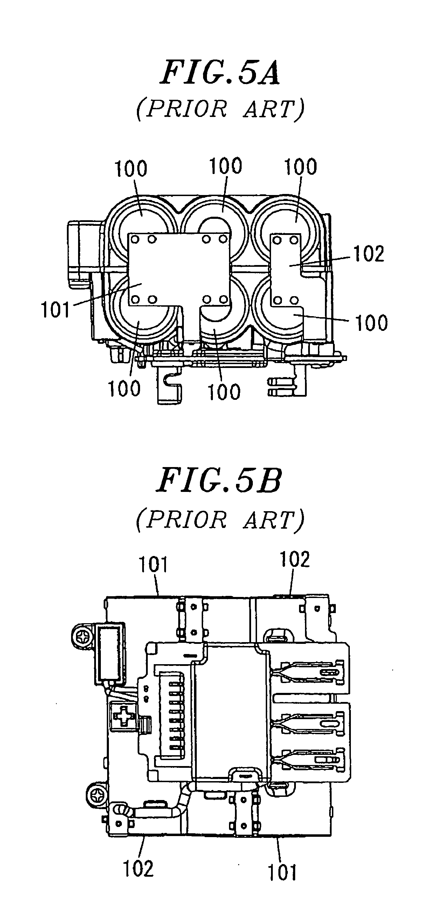

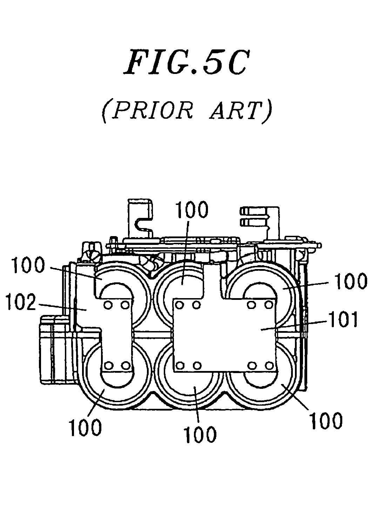

A battery pack having a plurality of battery cells is used in a battery-driven device such as an electric power tool or the like. Figs. 5A through 5C show the internal structure of a conventional battery pack disclosed in, e.g., Japanese Patent Application Publication No. 2010-50044.

The battery pack shown in Figs. 5A through 5C includes six battery cells 100 in total, which are arranged in two rows and three columns. Adjoining battery cells 100 are electrically connected by thin connector plates 101 and 102. The connector plate 101 of rectangular shape having a large size performs parallel connection between the battery cells 100 arranged in pair and serial connection between the blocks of the parallel-connected battery cells 100.

In the conventional battery pack shown in Figs. 5A through 5C, the battery cells 100 in the upper row are arranged just above the battery cells 100 in the lower row. Therefore, the vertical dimension of the battery cells 100 as a whole becomes greater. Moreover, the connector plate 101 for connecting the battery cells 100 needs to be formed into a rectangular shape with a relatively large vertical dimension. Thus, the conventional battery pack suffers from a problem in that it is difficult to reduce the size thereof.

### Summary of the Invention

In view of the above, the present invention relates to reducing the overall size of a battery pack by changing the arrangement of battery cells and the shape of a connector plate.

In order to accomplish the above object, the present invention may be configured as set forth below.

In accordance with an embodiment of the present invention, there is provided A battery pack, including: cylindrical columnar battery cells arranged at least in two rows and two columns along vertical and horizontal directions orthogonal to center axes of the battery cells, each of the battery cells including an electrode terminal formed in one end portion thereof; and a connector plate to which the electrode terminals of four vertically and horizontally adjoining battery cells are joined, the connector plate arranged to parallel connect each pair of the battery cells adjoining in the same direction to form battery cell blocks, the connector plate being configured to serially connect the battery cell blocks, wherein the center axes of the battery cells are positioned at vertexes of a parallelogram when the vertically and horizontally adjoining battery cells are seen at one end side thereof, the connector plate having a contour conforming to respective sides of the parallelogram.

The connector plate and the battery cells may be joined by spot welding in which an electric current is allowed to flow between each pair of welding points. The connector plate may include cutouts for suppressing generation of split flows of a welding current. Each of the cutouts may be formed between the welding points.

The connector plate and the battery cells may be joined by spot welding in which an electric current is allowed to flow between each pair of welding points. The connector plate may include inter-cell cutouts for suppressing generation of split flows of a welding current. Each of the inter-cell cutouts may be formed between a welding area of one of the battery cell blocks and a welding area of the other battery cell block.

The inter-cell cutouts may be cut inwardly from outer edges of the connector plate to extend toward each other by a substantially equal distance.

An electric power tool may include the battery pack.

The present invention has an advantageous effect in that the overall size of a battery pack can be reduced by changing the arrangement of battery cells and the shape of a connector plate.

### Brief Description of the Drawings

The objects and features of the present invention will become apparent from the following description of embodiments, given in conjunction with the accompanying drawings, in which:
Fig. 1A is a side view showing the internal structure of a battery pack according to a first embodiment of the present invention, Fig. 1B being a bottom view thereof and Fig. 1C being another side view thereof as seen at the opposite side of the battery pack shown in Fig. 1A;
Fig. 2 is a perspective view showing the outward appearance of the battery pack of the first embodiment;
Fig. 3 is a side view showing an electric power tool equipped with the battery pack of the first embodiment;
Fig. 4A is a side view showing the internal structure of a battery pack according to a second embodiment of the present invention, Fig. 4B being a bottom view thereof and Fig. 4C being another side view thereof as seen at the opposite side of the battery pack shown in Fig. 4A; and
Fig. 5A is a side view showing the internal structure of a conventional battery pack, Fig. 5B being a bottom view thereof and Fig. 5C being another side view thereof as seen at the opposite side of the battery pack shown in Fig. 5A.

### Detailed Description of the Preferred Embodiments

Preferred embodiments of the present invention will be described with reference to the accompanying drawings which form a part hereof.

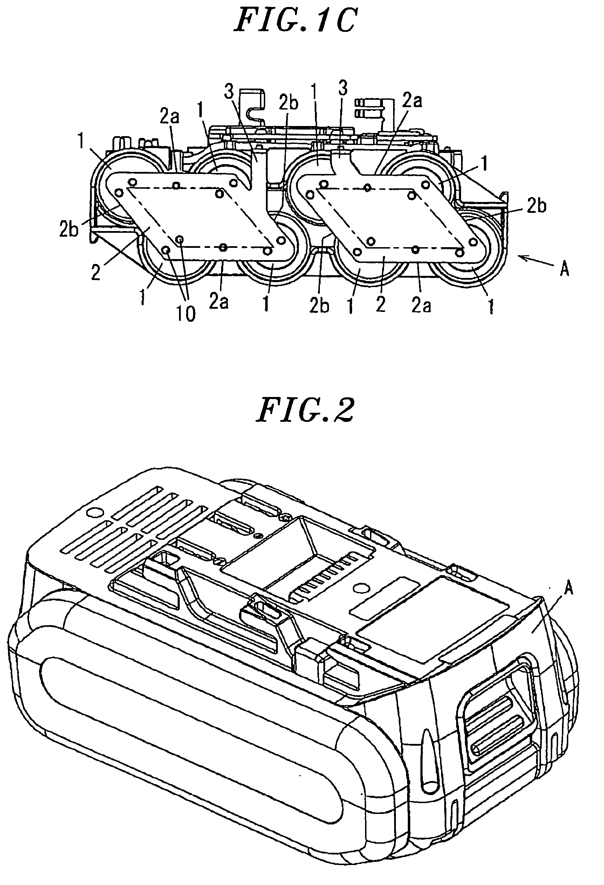

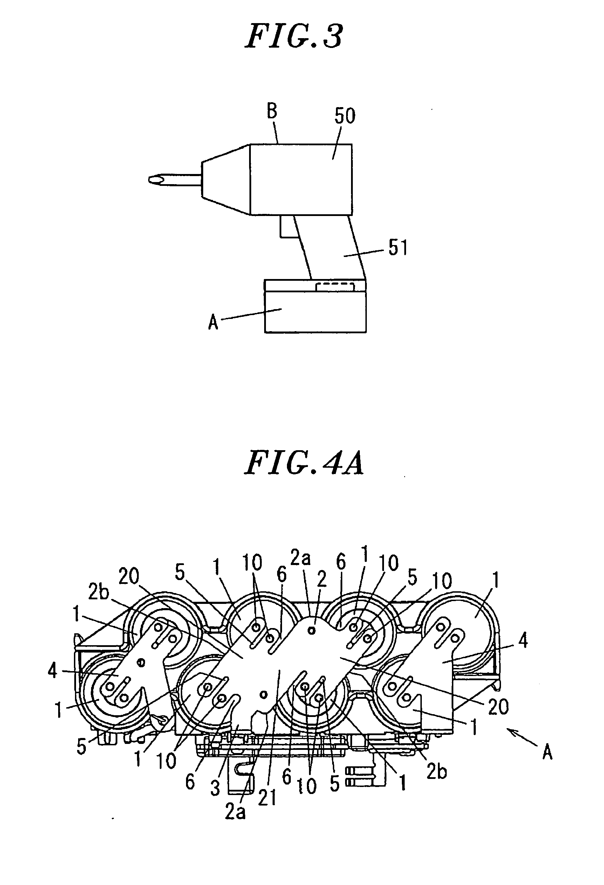

Fig. 2 shows the outward appearance of a battery pack A according to a first embodiment of the present embodiment. Fig. 3 illustrates the outward appearance of a portable electric power tool B equipped with the battery pack A of the first embodiment. The electric power tool B includes a barrel portion 50 within which a motor and a power transfer unit are arranged and a handle portion 51 extending from the barrel portion 50. The battery pack A of box shape is removably attached to the tip end surface of the handle portion 51. The device for use with the battery pack A is not limited to the electric power tool B but may be any other battery-driven device that can be driven by the electric power of the battery pack A.

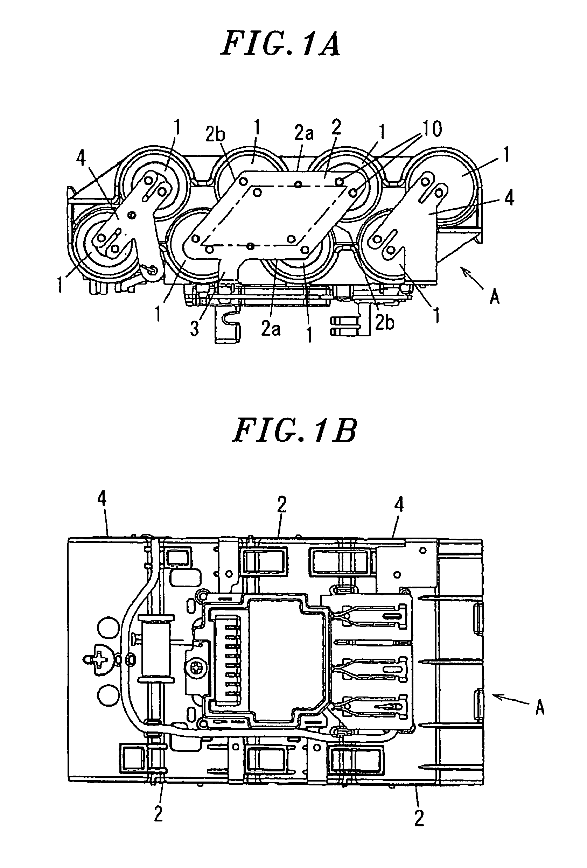

In Figs. 1A through 1C, there is shown the internal structure of the battery pack A accommodated within an outer casing. Fig. 1A is a side view of the battery pack A, Fig. 1B is a bottom view thereof and Fig. 1C is another side view thereof as seen at the opposite side of the battery pack shown in Fig. 1A. In the following description, the left-right direction in Figs. 1A and 1C will be defined as "horizontal direction" and the up-down direction in Figs. 1A and 1C will be referred to as "vertical direction", when cylindrical columnar battery cells 1 are seen at one end side thereof.

The battery pack A of the present embodiment includes eight cylindrical columnar battery cells 1 having the same shape and size, which are arranged in two rows along the vertical direction (the up-down direction) and in four columns along the horizontal direction (the left-right direction). Each of the battery cells 1 is arranged so that the center axis thereof can be orthogonal to the vertical direction and the horizontal direction.

Referring to Figs. 1A and 1C, the positions of the center axes of the respective battery cells 1 in the upper and lower rows are staggered along the horizontal direction. Therefore, when four vertically and horizontally adjoining battery cells 1 are seen at one end side thereof, the center axes of the respective battery cells 1 are positioned at the vertexes of a parallelogram (see imaginary lines in Figs. 1A and 1C).

The lower ends of the battery cells 1 in the upper row are positioned lower than the upper ends of the battery cells 1 in the lower row. As a result, the distance between the upper and lower sides of the parallelogram is shorter than the diameter of the battery cells 1.

This arrangement makes it possible to reduce the vertical dimension of the battery cells 1 as a whole.

Referring to Fig. 1A, the electrode terminals on one end portions of four vertically and horizontally adjoining battery cells 1 arranged in the central area are joined to a common connector plate 2. Turning to Fig. 1C, the electrode terminals on one end portions of four vertically and horizontally adjoining battery cells 1 arranged in one side area and the electrode terminals on one end portions of four vertically and horizontally adjoining battery cells 1 arranged in the other side area are joined to different connector plates 2 having the same shape. The operation of jointing the connector plates 2 and the respective battery cells 1 is performed by spot welding in which an electric current is caused to flow between every pair of welding points 10.

The connector plates 2 have the same function as that of the connector plate 101 of the conventional battery pack mentioned earlier. More specifically, each of the connector plates 2 serves to parallel connect each pair of the battery cells 1 adjoining in the vertical direction (the up-down direction) and to serially connect the blocks of the parallel-connected battery cells 1 in the horizontal direction (the left-right direction).

In the present embodiment, each of the connector plates 2 has a contour like a parallelogram. The contour of each of the connector plates 2 has a shape conforming to the respective sides of a parallelogram indicated by an imaginary line in Figs. 1A and 1C (namely, a parallelogram whose vertexes coincide with the center axes of four vertically and horizontally adjoining battery cells 1 electrically connected by each of the connector plates 2).

For the sake of safety, four corner portions of each of the parallelogram-shaped connector plates 2 are formed into a round shape. Four sides (namely, a pair of horizontal edges 2a and a pair of vertical edges 2b) of each of the connector plates 2 are formed into a rectilinear shape. The horizontal edges 2a are parallel to each other. So are the vertical edges 2b. By forming each of the connector plates 2 into this shape, it is possible to prevent each of the connector plates 2 from making contact with the battery cells 1 of opposite polarity, which would otherwise result in short-circuiting. A signal terminal portion 3 extends from one side of each of the parallelogram-shaped connector plates 2. The term "parallelogram-shaped connector plates 2" used herein is intended to mean the contour of the portion other than the signal terminal portion 3.

In addition to the connector plates 2 having a large size, connector plates 4 smaller in size than the connector plates 2 are used to parallel connect each pair of battery cells 1 to form parallel-connected cell blocks. The parallel-connected cell blocks are serially connected to each other. Each of the connector plates 4 having a small size serves to parallel connect each pair of vertically adjoining battery cells 1. The connector plates 4 have a vertical dimension substantially equal to the vertical dimension of the connector plates 2 and a horizontal dimension nothing more than a fraction of the horizontal dimension of the connector plates 2.

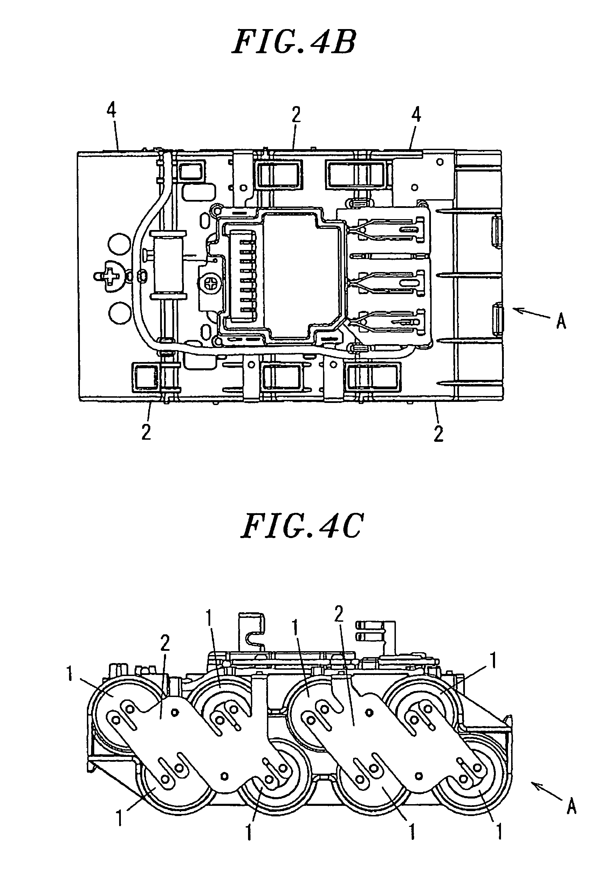

Next, a battery pack A according to a second embodiment of the present invention will be described with reference to Figs. 4A through 4C. Particular attention is invited to Fig. 4A. The same components of the present embodiment as those of the first embodiment will not be described in detail. Detailed description will be given on only the characteristic components of the present embodiment differing from those of the first embodiment.

In the battery pack A of the present embodiment, each of the connector plates 2 has slit-like cutouts 5 formed between each pair of welding points 10. By forming the cutouts 5 between the welding points 10, it is possible to suppress generation of split flows of a welding current and resultant reduction of welding efficiency when spot welding is performed by bringing external electrodes into contact with the welding points 10. In other words, the formation of the cutouts 5 makes it easy to perform the spot welding in a reliable manner.

More specifically, the cutouts 5 are formed by inwardly cutting the horizontal edges 2a of each of the connector plates 2 having an overall shape like a parallelogram. The cutouts extend substantially parallel to the vertical edges 2b of each of the connector plates 2.

In the connector plates 2 of the present embodiment, cutouts 6 for suppressing generation of split flows of a welding current are formed between the welding area of one of the blocks of vertically parallel-connected battery cells 1 (hereinafter referred to as "battery cell blocks") and the welding area of the other block of vertically parallel-connected battery cells 1. In the following description, the cutouts 6 will be referred to as "inter-cell cutouts 6" to distinguish the cutouts 6 from the cutouts 5.

The inter-cell cutouts 6 are formed by inwardly cutting the horizontal edges 2a of each of the connector plates 2. Each of the inter-cell cutouts 6 is positioned so that each pair of the welding points 10 of the battery cells 1 can be interposed between each of the inter-cell cutouts 6 and each of the vertical edges 2b of the connector plates 2. The inter-cell cutouts 6 extend substantially parallel to the vertical edges 2b of the connector plates 2. In other words, the vertical edges 2b of the connector plates 2, the cutouts 5 inwardly cut from the horizontal edges 2a and the inter-cell cutouts 6 inwardly cut from the horizontal edges 2a are parallel to one another.

One of the welding points 10 for the connection of the battery cells 1 is formed in a protrusion arranged between each of the vertical edges 2b and each of the cutouts 5. The other welding point 10 is formed in a protrusion arranged between each of the cutouts 5 and each of the inter-cell cutouts 6.

The inter-cell cutouts 6 are inwardly cut from the upper and lower horizontal edges 2a of each of the connector plates 2 to extend toward each other by a substantially equal distance. By the inter-cell cutouts 6 formed at four points in one-to-one correspondence with the respective battery cells 1, each of the connector plates 2 is divided into three parts, namely two parallel connection parts 20 and one serial connection part 21. The parallel connection parts 20 serve to parallel connect each pair of vertically adjoining battery cells 1 to thereby form battery cell blocks. The serial connection part 21 serves to serially connect the battery cell blocks thus formed.

In the present embodiment, the inter-cell cutouts 6 are cut to extend toward each other by a substantially equal distance. Thus, each of the connector plates 2 is shaped such that the middle portions of the parallel connection parts 20 are connected to the serial connection part 21. In a current circuit formed by serially connecting the battery cell blocks, therefore, it is possible to substantially equalize electric resistances of each of the connector plates 2 against the respective battery cell blocks. This helps restrain the charging/discharging current from becoming unequal between the battery cells 1.

Each of the connector plates 2 according to the present embodiment has a parallelogram shape as a whole even though the cutouts 5 and 6 are cut inwardly from the horizontal edges 2a. Therefore, the maximum vertical distance between the horizontal edges 2a is smaller than the diameter of the battery cells 1. The overall shape of each of the connector plates 2 provided with the cutouts 5 and 6 (excluding the signal terminal portion 3) is substantially symmetrical with respect to a point.

In the battery packs A of the first end second embodiments described above, the cylindrical columnar battery cells 1 are arranged at least in two rows and two columns along the vertical and horizontal directions orthogonal to the center axes of the battery cells 1. The electrode terminals on one end portions of four vertically and horizontally adjoining battery cells 1 are joined to the same connector plate 2. Each pair of the battery cells 1 adjoining in the same direction (the vertical direction) is parallel connected by the connector plate 2 to form battery cell blocks. Moreover, the battery cell blocks are serially connected by the connector plate 2.

When four vertically and horizontally adjoining battery cells 1 are seen at one end side thereof, the center axes of the respective battery cells 1 are positioned at the vertexes of a parallelogram. The contour of the connector plate 2 has a shape conforming to the respective sides of a parallelogram.

This makes it possible to reduce, as far as possible, the overall size (especially, the vertical dimension) of the battery cells 1 despite the fact that the battery cells 1 are arranged in two directions. Since the connector plate 2 is formed into a parallelogram shape, it is possible to effectively prevent the connector plate 2 from making contact with other members adjacent thereto, which would otherwise lead to short-circuiting.

In the battery pack A of the second embodiment, the connector plate 2 and the respective battery cells 1 are joined by spot welding in which an electric current is allowed to flow between each pair of the welding points 10. The cutouts 5 for suppressing generation of split flows of a welding current are formed between the welding points 10 of the connector plate 2.

This makes it possible to suppress generation of split flows of a welding current and resultant reduction of welding efficiency when spot welding is performed by causing a welding current to flow between each pair of the welding points 10. In other words, the formation of the cutouts 5 between the welding points 10 makes it easy to perform the spot welding in a reliable manner.

In the battery pack A of the second embodiment, the connector plate 2 and the respective battery cells 1 are joined by spot welding in which an electric current is allowed to flow between each pair of the welding points 10. In addition, the inter-cell cutouts 6 for suppressing generation of split flows of a welding current are formed between the welding area of one of the blocks of parallel-connected battery cells 1 and the welding area of the other block of parallel-connected battery cells 1.

This makes it possible to suppress generation of split flows of a welding current and resultant reduction of welding efficiency when spot welding is performed by causing a welding current to flow between each pair of the welding points 10. In other words, the formation of the inter-cell cutouts 6 makes it easy to perform the spot welding in a reliable manner.

In the battery pack A of the second embodiment, the inter-cell cutouts 6 are inwardly cut from the outer edges of the connector plate 2 to extend toward each other by a substantially equal distance.

This makes it possible to substantially equalize electric resistances of each of the connector plates 2 against the respective battery cell blocks in a current circuit formed by serially connecting the battery cell blocks. Accordingly, the charging/discharging current is restrained from becoming unequal between the battery cells 1.

The battery packs A of the first and second embodiments are all provided in the electric power tool B. This makes it possible to effectively reduce the overall size of the electric power tool B as well as the size of the battery packs A.

While the present invention has been described above based on certain embodiments shown in the accompanying drawings, the present invention is not limited to these embodiments. The respective embodiments may be properly modified in design and may be appropriately combined without departing from the scope of the invention.

## Claims

1. A battery pack, comprising:
cylindrical columnar battery cells arranged at least in two rows and two columns along vertical and horizontal directions orthogonal to center axes of the battery cells, each of the battery cells including an electrode terminal formed in one end portion thereof; and
a connector plate to which the electrode terminals of four vertically and horizontally adjoining battery cells are joined, the connector plate arranged to parallel connect each pair of the battery cells adjoining in the same direction to form battery cell blocks, the connector plate being configured to serially connect the battery cell blocks,
wherein the center axes of the battery cells are positioned at vertexes of a parallelogram when the vertically and horizontally adjoining battery cells are seen at one end side thereof, the connector plate having a contour conforming to respective sides of the parallelogram.

2. The battery pack of claim 1, wherein the connector plate and the battery cells are joined by spot welding in which an electric current is allowed to flow between each pair of welding points, the connector plate including cutouts for suppressing generation of split flows of a welding current, each of the cutouts being formed between the welding points.

3. The battery pack of claim 1 or 2, wherein the connector plate and the battery cells are joined by spot welding in which an electric current is allowed to flow between each pair of welding points, the connector plate including inter-cell cutouts for suppressing generation of split flows of a welding current, each of the inter-cell cutouts being formed between a welding area of one of the battery cell blocks and a welding area of the other battery cell block.

4. The battery pack of claim 3, wherein the inter-cell cutouts are cut inwardly from outer edges of the connector plate to extend toward each other by a substantially equal distance.

5. An electric power tool comprising the battery pack of any one of claims 1 through 4.
